# EUROPEAN PATENT APPLICATION

(11) **EP 2 903 109 A1**
(43) Date of publication of application: **05.08.2015**
(21) Application number: 15153016.9
(22) Date of filing: 29.01.2015
(51) Int. Cl.: H02G 3/04, H02G 3/22

(54) **Seal device, kit of parts, adapter, and method**

(30) Priority: 30.01.2014 NL 2012176
(71) Applicant: Gerco Brandpreventie B.V., 2871 NJ Schoonhoven (NL)
(72) Inventor: van Goudzwaard, Danny, 2871 NJ Schoonhoven (NL)
(74) Representative: Jansen, Cornelis Marinus

(57) **Abstract**

The invention relates to a substantially fire resisting seal device for a through hole in a partition for conducting one or more cables there through. The device comprises a substantially annular sawing sleeve. Said sleeve defines an inner passage for conducting at least one cable there through. It is noted that the sleeve is provided with saw teeth positioned at a distal end portion of said sleeve. Further, the seal device comprises an insertion plug for enclosing a portion of one or more cables conducted through the sawing sleeve. The device is arranged such that the insertion plug can be inserted into the sawing sleeve at least partly such as to substantially seal off the passage through the sawing sleeve. Advantageously, the insertion plug may comprise a compressible seal material, e.g. a compressible foam, preferably a resilient foam, for enclosing a portion of one or multiple cables.

## Description

The invention relates to a method for realizing a substantially fire-resistant cable passage through a relatively soft partition.

Structures, such as buildings, offshore facilities or vessels, are often provided with partitions. This partitions may for instance be or comprise so-called partition walls or partition layers, such as isolation layers and/or cover layers, e.g. fire resistant cover layers. The partition can be relatively soft, e.g. compared to stone or concrete walls. Such partitions may be substantially fire resistant or fire retardant. However, the structure is often equipped with cabling that should extend from one side of a partition to another side of the partition. Therefore, generally through hole are made in partitions in order to conduct one or more cables there through.

In view of fire retardancy, such holes can form weak spots. The holes can form passages that may not only let through potentially toxic smoke, but can also enable that flames spread from one side of the partition to the other side thereof relatively easily.

In a known method for improving the fire retardancy of a partition having a through hole for letting a cable through, firstly a relatively large through hole is drilled or cut, then one or more cables are installed through said through hole, and finally firestop mortar and/or fire retardant sealant, cement, glue or other filler material is used to fill up any opening remaining after installing said cable(s).

A disadvantage of this method can be that after the mortar, sealant, cement or glue has set, no additional or replacement cables can be installed through the through hole, at least not in an elegant manner. Hence, installing new cables will generally require making a new hole through the partition. This method can thus be cumbersome, time consuming and error-prone. Besides, a further disadvantage of the method is that, for instance in case of constructing a new building, a hole will normally not be sealed until just before the completion of the respective building. Consequently, the through hole may thus form a smoke and/or fire passage during a large part of the construction work. Long persistence of smoke and fire passages through a partition can be highly unwanted and even dangerous, especially because facilities like fire escape stairs and fire extinguishers may often be not yet present during construction works, whereas construction work may often even increase the risk of fire.

An object of the present disclosure is to provide an alternative method or alternative means for sealing a hole in a relatively soft partition for one or more cables. It is an object of the present invention to alleviate or solve at least one of the disadvantages mentioned above. An aim of the present invention is to provide for a method which can enable an installer or electrician to realize a substantially fire-resistant cable passage through a relatively soft partition, e.g. a partition comprising and/or being made of mineral wool, such as rock wool or stone wool, plasterboard, or foam material in a relatively swift, simple and/or fool-proof manner. A further aim of the invention is to provide a substantially fire resisting seal device that not only can maintain a certain fire resistance at least partly and/or can increase fire retardancy and/or smoke penetration of a partition, especially a relatively soft partition, through which one or more cables are extending, but which device may also allow to remove, replace, and/or install one or multiple cables after said through hole is sealed off, preferably in a manner facilitating that after said removing, replacing and/or installing, the through hole can be sealed off again, in a relatively easy, swift and/or fool-proof way.

In a first aspect, the invention provides for a substantially fire resisting seal device for a through hole in a partition for conducting one or more cables there through, comprising a substantially annular sawing sleeve defining an inner passage for conducting at least one cable there through, the sleeve being provided with saw teeth positioned at a distal end portion of said sleeve, the device further comprising an insertion plug for enclosing a portion of one or more cables conducted through the sawing sleeve, wherein the device is arranged such that the insertion plug can be inserted into the sawing sleeve at least partly such as to substantially seal off the passage through the sawing sleeve.

By providing the sawing sleeve, which can be used to cut a through hole in a partition, and which subsequently can be left behind in the partition, a passage may be realized in the partition in a relatively swift manner. Furthermore, by leaving said sawing sleeve behind in the relatively soft partition, it can be counteracted that the through hole widens unintentionally. For instance, the present invention can make it superfluous to remove a cutting or drilling tool from said passage, which removal in conventional methods may cause unintentional widening of the through hole. Besides, the sawing sleeve left behind in the partition can counteract that repeated insertion and removal of the insertion plug and/or cables will widen the passage in the partition.

Moreover, due to that the sawing sleeve can have a passage there trough having a known diameter, a passage through the partition can be realized of which a diameter may only differ minimally from the intended diameter, whereas in case of cutting a through hole in a conventionally manner, a relatively large variance can be possible, e.g. due to a walking drill bit. Therefore, it may be assured that the insertion plug can fit relatively well in the passage through the sawing sleeve, which sleeve is provided through the partition, whereas it could perhaps not be assured that such an insertion plug would have fitted as well in a through hole drilled or cut in a relatively soft partition in a conventional manner.

Advantageously, the insertion plug can comprise a compressible seal material, e.g. a compressible foam, preferably a resilient seal material, e.g. a resilient foam, for enclosing a portion of one or multiple cables. Hence, a cable passage can be impressed in the insertion plug that can relatively well fit the cable(s) intended to be led through the device. By making said foam resilient, an even better fit may be obtained and/or said resilient foam may enable that the plug can seal up the passage in the sawing sleeve relatively well after removal of one or more cable(s).

In embodiments, the insertion plug can comprise an insertion sleeve, e.g. comprising one or more relatively stiff or rigid shell parts, wherein an inner side of the insertion sleeve is provided with the compressible material or foam.

Further, the insertion plug can comprise an intumescent material. Preferably, said intumescent material can be provided at an inner side of the plug, such that a substantially sealed off cable passage through the plug can be sealed off even better when the intumescent material swells up in case of fire. For instance, at least the compressible seal material mentioned above can be or comprise an intumescent material.

Advantageously, the insertion plug can be arranged to be brought from an open position, in which a cable can be placed within the insertion plug, into a closed position, in which the insertion plug is closed, preferably around one or more cables. In embodiments, the insertion plug, preferably its insertion sleeve, can be provided with at least one hinge, preferably a film hinge, and/or at least one lock for retaining the insertion plug in the closed position. The insertion plug may be arranged to be releasably closable, such that it can be closed and opened repeatably, e.g. in order to place, replace and/or remove one or more cables. This can be especially advantageously when the compressible seal material is resilient.

By providing only a limited number of saw teeth, such as for instance three saw teeth, wherein adjacent ones of said teeth are spaced apart relatively far away from each other, e.g. having intervals being larger than the width of one of two adjacent teeth, it can be counteracted that said saw teeth damage cables led through the sawing sleeve.

In embodiments, the sawing sleeve can be provided with one or more couplers for coupling to a driving device, such as a drill, preferably an electric drill, or an adapter for indirectly coupling the sawing sleeve to a drill.

The invention also provides for a kit of parts, suitable for forming a device comprising a substantially annular sawing sleeve and an insertion plug for insertion therein, which plug is arranged for enclosing a portion of one or more cables conducted through the sawing sleeve.

It is noted that said kit of parts may include an adapter for coupling the sawing sleeve to a drill, especially an electric drill, wherein the adapter comprises one or more couplers for coupling to the sawing sleeve and further comprises a shank for engaging a chuck of a drill. Hence, said shank can be grasped by the chuck of an electric drill, such that said drill can be used to drive the sawing sleeve in order to cut it into a relatively soft partition.

Further, the invention relates to such an adapter.

The invention also relates to a method for realizing a substantially fire-resistant cable passage through a relatively soft partition, e.g. a partition comprising and/or made of mineral wool, e.g. man-made mineral fibres such as stone wool or rock wool, plasterboard, foam material, or the like.

Advantageous embodiments according to the invention are described in the appended claims.

By way of non-limiting example only, embodiments of the present invention will now be described with reference to the accompanying figures in which:
Figure 1 shows a schematic side view of a partition and three substantially fire resisting seal devices according to the invention in three different stages of installation;
Figure 2 shows a schematic exploded view of an embodiment of a substantially fire resisting seal device according to the invention; and
Figure 3 shows a schematic perspective view of an insertion plug of the device of Figure 2 in an open position.

The embodiments disclosed herein are shown as examples only and should by no means be understood as limiting the scope of the claimed invention in any way. In this description the same or similar elements have been provided with the same or similar reference signs.

In this description a seal device can be understood as at least including but not necessarily limited to a configuration used to substantially seal off an opening in a substantially fire retardant or fire resistant manner. Fire resistance or fire retardancy is to be understood as including at least but not limited to a quality or capacity of withstanding or resisting fire or flames to a certain extent for a certain period of time, for example being 30, 60, 90 or 120 minutes fire resistant tested to a fire safety standard, for instance NEN-EN 1366, preferably NEN-EN 1366-3, NEN-EN 1366-3: 2009 and/or EN 1366-4: 2006.

Further it is noted that smoke retardancy can be understood as including at least but not limited to a quality or capacity of blocking smoke to pass or penetrate to a certain extent for a certain period of time, for example being 30, 60, 90 or 120 minutes smoke tight tested to a smoke tightness safety standard, for example DIN EN 13501-2. It is noted that sealingly enclosing and/or sealingly fitting should be understood as including at least but not limited to enclosing and/or fitting in such a way that respective parts touch, abut or fit to each other, preferably such that they do not substantially allow air or smoke to pass between them.

Moreover, a relatively soft partition can be understood as including at least but not limited to a partition formed of and/or comprising a relative soft material, e.g. in relation to concrete, brick, metal and/or wood. The relative soft material can for instance be or comprise mineral wool, e.g. man-made mineral fibres such as rock wool or stone wool, plasterboard, or foam, such as a rigid and/or dense foam, or the like. It is noted that the partition can be a wall or a ceiling, or a part thereof, such as for instance a panel and/or an isolation and/or cover layer of a wall or ceiling.

Further, it is noted that compressible can be understood as including at least but not limited to an ability to decrease volume as a response to a pressure increase and/or an ability to be pushed aside at least partly as a response to a pressure increase. It is noted that resilient could be understood at least as but not limited to including a capacity or ability to spring back or return at least partly to its original form or position after being compressed, which thus may include being pushed away.

Furthermore, in this description a cable can be understood as at least including but not necessarily limited to an insulated cable used for instance for power distribution and/or communication, such as an electric cable or wire and/or a communication or network cable.

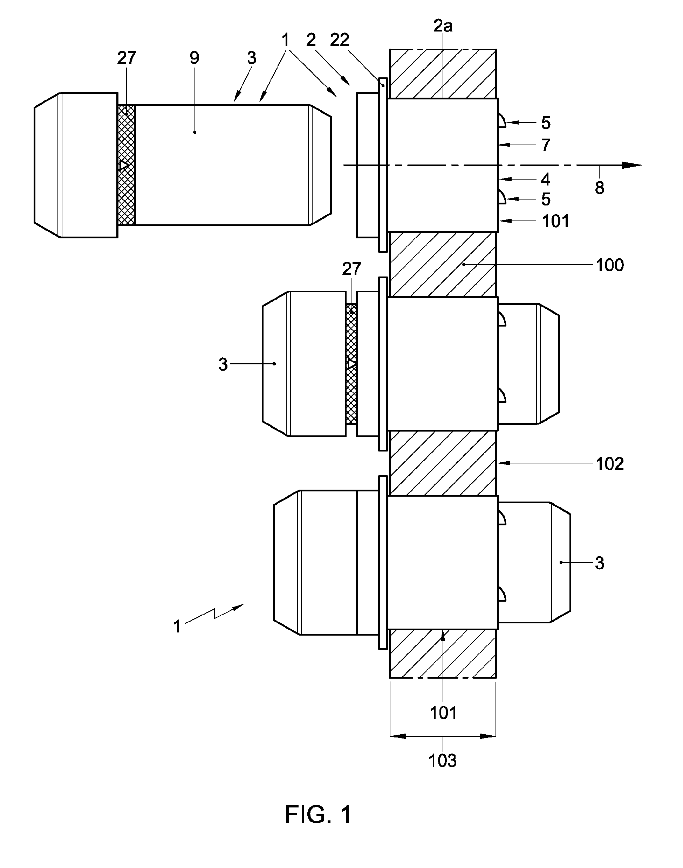

Figure 1 shows a schematic side view of a partition 100 and three substantially fire resisting seal devices 1 according to the invention, each shown in a different stage of installation. Each device 1 comprises a substantially annular sawing sleeve 2 and an insertion plug 3. It is noted that, in the schematic side view of Figure 1, the partition 100 is partly cut away for sake of clarity, such that portions 2a of the sawing sleeves 2, which portion 2a are positioned in through holes 101 in the partition100, are visible.

Each device 1 is a substantially fire resisting seal device 1 for a through hole in a partition 100, especially a relatively soft partition, for conducting one or more cables there through. The partition 100 may for instance be or comprise a so-called partition wall, a cover layer, or a partition layer, such as an isolation layer, which may be relatively soft, e.g. in comparison with a stone or concrete wall. Preferably, the partition can be substantially fire resistant or fire retardant.

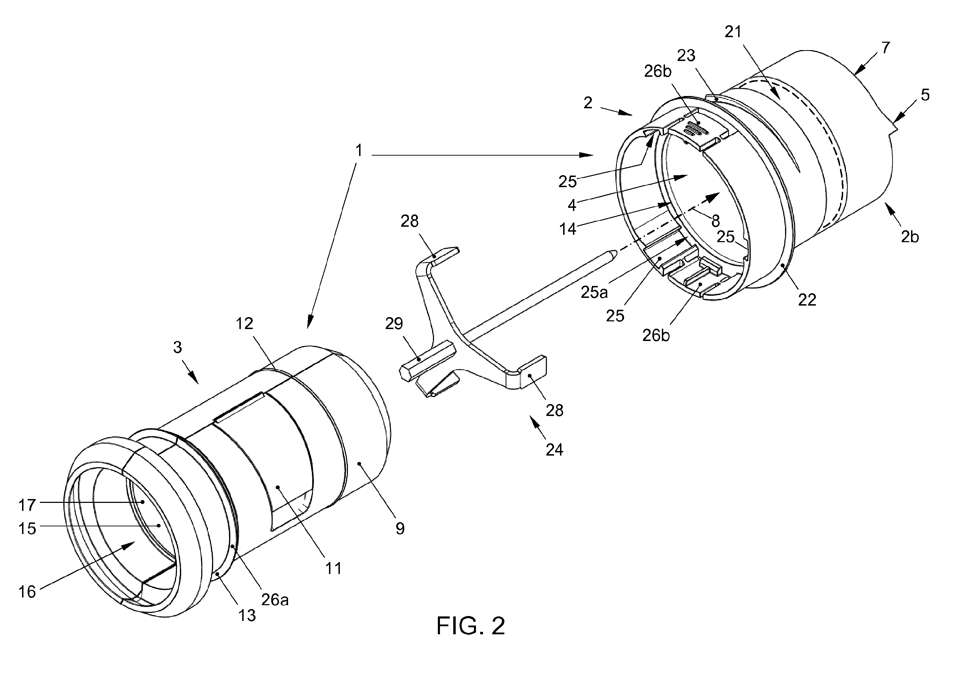

Such as best can be seen in Figure 2, which shows a schematic exploded view of an embodiment of a substantially fire resisting seal device 1 according to the invention, the sawing sleeve 2 defines an inner passage 4 for conducting at least one cable there through. Further, the sawing sleeve 2 is provided with saw teeth 5 positioned at a distal end portion 2b of the sawing sleeve 2. Preferably said teeth 5 can be provided at a distal end edge 7 of the sawing sleeve 2 and/or said teeth 5 can protrude substantially in axial direction 8 of the sawing sleeve 2, more preferably said teeth 5 can be protruding away from said edge 7. It is noted that the saw teeth 5 may be arranged to cut through a relatively soft material. In embodiments, the saw teeth 5 may be arranged such as to be worn at least partly when reaching the distal end face 102 of the partition, such that said teeth 5 are less sharp, thereby counteracting that they will damage a cable and/or harm a user.

The insertion plug 3 is arranged for enclosing a portion of one or more cables conducted through the sawing sleeve 2. Further, the device 1 is arranged such that the insertion plug 3 can be inserted into the sawing sleeve 2 at least partly such as to substantially seal off the passage 4 through the sawing sleeve 2.

Advantageously, the insertion plug 3 can comprise a compressible material or so-called compressible seal material, e.g. a compressible foam, preferably a seal material, such as a resilient foam, for enclosing a portion of one or multiple cables, and/or a bundle of cables.

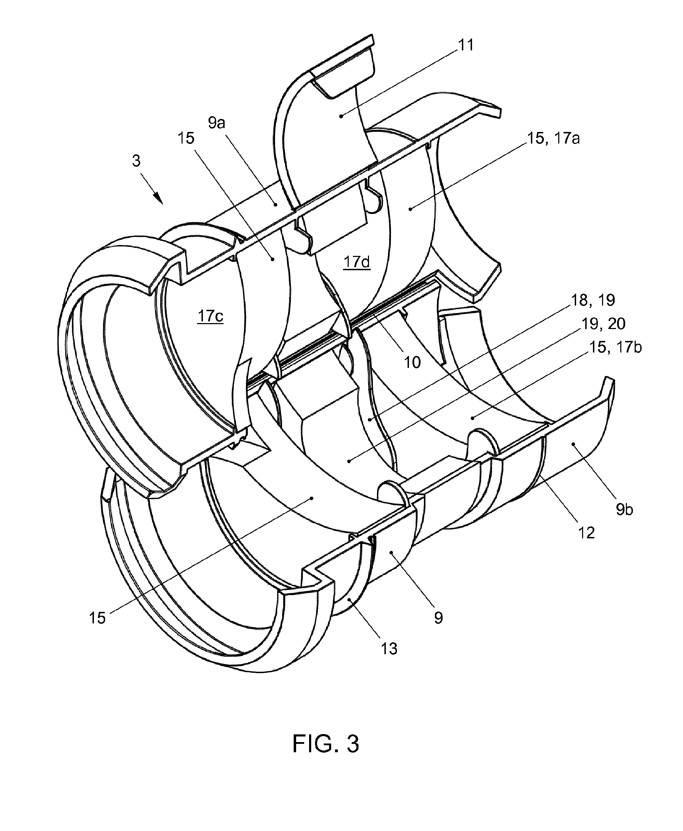

Such as for instance can be seen in Figure 3, which shows a schematic perspective view of the insertion plug 3 of the device 1 of Figure 2 in an open position, the insertion plug 3 may comprise an insertion sleeve 9. An inner side of the insertion sleeve 9 may be provided with the compressible material, for enclosing one or more cables.

In embodiments, the insertion sleeve 9 can comprise one or more shell parts 9a, 9b, especially relatively stiff or rigid shell parts. Additionally or alternatively, the insertion sleeve 9 may be an injection moulded part and/or may be made of a plastic material, such as for instance PP.

Advantageously, the insertion plug 3 can be arranged to be brought from an open position, e.g. as shown in Figure 3, in which a cable can be placed within the insertion plug 3, into a closed position, e.g. as shown in Figures 1 and 2, in which the insertion plug 3 is closed, preferably around one or more cables.

Thereto, the insertion plug 3, preferably its insertion sleeve 9, may for instance be formed as a hingable and/or flexibly deformable insertion sleeve.

The insertion plug 3, preferably its insertion sleeve 9, may comprise at least one hinge 10, preferably a film hinge 10. The hinge 10 may extend substantially in axial or longitudinal direction of the plug 3. In embodiments, the plug 3 may comprise multiple hinges, e.g. two hinges, which are extending substantially parallel to each other, such that they can together form a relatively broad hinging construction, which may facilitate that two parts of the plug, e.g. two shell parts 9a, 9b thereof, can be spaced apart to some extent in the open position of the plug 3.

Additionally or alternatively, the insertion plug 3, preferably its insertion sleeve 9, may comprise at least one lock 11 for retaining the insertion plug 3 in the closed position. For example, the lock 11 can be formed as a snap connector.

It is noted that the insertion plug 3 can preferably be arranged to be releasably closable, such that the plug 3 can be opened and closed multiple times, e.g. in order to remove, replace or add one or more cables.

Further it is noted that the device 1 can be arranged for forming a substantially gastight cut-off between the sawing sleeve 2 and the insertion plug 3 or so-called insert 3 or so-called plug 3.

In embodiments, the insertion plug 3, preferably its insertion sleeve 9, can include an insertion portion 3a for insertion into the sawing sleeve 2, wherein an outside of the insertion plug 3 and an inside of the passage 4 of the sawing sleeve 2 can be shaped such that the plug 3 and the sawing sleeve 2 ca substantially fittingly engage each other when the insertion plug 3 is inserted in the sawing sleeve 2.

In embodiments, an outer diameter of the insertion plug 3, especially of its insertion portion 3a ca substantially correspond to an inner diameter of the sawing sleeve 2. For example, the inner diameter is only slightly larger than said outer diameter, wherein said diameters differ less than 3 mm, preferably at most 2 mm or at most 1 mm, such as for instance about 1 mm or about 0.5 mm. Hence, said plug 3 may be fitted relatively tightly into the passage 4 of said sleeve 2, such as to seal up said passage substantially. However, in alternative embodiments, for instance when the sawing sleeve 2 and/or the plug 3 are at least partly deformable, e.g. compressible, the outer diameter of the plug 3 may be slightly larger than said inner diameter of the sawing sleeve, for facilitating a press fitting.

Preferably, the device 1 can be arranged for forming a substantially gastight cut-off between the sawing sleeve 2 and the insertion plug 3. Therefore, said diameters may for instance correspond substantially to each other. It is noted however that a slight clearance between said diameters may be advantageous, for instance in order to facilitate removing the plug 3 from the sawing sleeve 2. For instance thereto, the plug, especially its insertion portion 3a, can be provided with a sealing flange 12 or sealing ring, which in the closed position of the plug 3 may extend substantially around the plug 3. Preferably, said flange or ring 12 can have an outer diameter equal to or slightly larger than the inner diameter of the sawing sleeve 2, and/or the plug and/or said flange or ring 12 can be slightly deformable, such that the insertion plug 3 can be inserted into said sawing sleeve 2, thereby forming a substantially gas and/or smoke tight seal there between.

Alternatively or additionally, the insertion plug 3, e.g. its insertion sleeve 9, can be provided with an outwardly protruding portion 13, e.g. a flange 13, for sealing a slit between the sawing sleeve 2 and the plug 3, which slit may be present due to clearance or play. For example, said protruding portion 13 or flange 13 can be positioned at a proximal end of the insertion portion 3a and may, when the plug 3 is inserted, touch or abut an outwardly extending edge 14 or flange of the sawing sleeve 2, provided at or near a proximal end of the inner passage 4 of said sleeve 2. Hence, a substantially gas and/or smoke tight seal may be provided for.

In embodiments, an outer surface of the insertion plug 3, e.g. an outer surface of its insertion sleeve 9, can taper, especially from its proximal end towards it distal end, in order to be tightly inserted into the passage 4 of the sawing sleeve.

As noted above, the insertion plug 3 can comprise a compressible seal material 15, e.g. a compressible foam 15, preferably a resilient foam, for enclosing a portion of one or multiple cables, and/or a bundle of cables. Preferably, the compressible material 15 is arranged within the insertion sleeve 9, such that, in the closed position, especially when no cable is extending through said plug 3, the compressible material 15 is substantially blocking a passage 16 through said plug 3. It is noted that the compressible material 15 may be located such as to form a wall 17 for blocking said passage 16, at least in the closed position. For example, the compressible material15 may comprise multiple wall parts 17a, 17b, together forming said blocking wall 17 in the closed position. As can be seen in Figure 3, at least a part of the wall parts may be positioned behind each other in the longitudinal direction of the plug 3, such as tot facilitate that that the plug can be arranged for hinging.

In embodiments, the insertion plug 3 can comprise multiple blocking walls 17 or compressible material blocking sections 17, for instance two walls 17c, 17d or sections, such as is shown in the exemplary embodiment of Figure 3. For instance, a first wall or section 17c can be positioned near a proximal end an another wall or section 17d can be positioned near a distal end of the plug 3.

Although a compressible material blocking section 17 comprises two cooperating foam parts 17a, 17b in the shown embodiment, a blocking wall 17 or other compressible material blocking section 17 may comprise another number of cooperating foam parts in alternative embodiments, such as for instance a multiple number of wedge-shaped foam parts.

Moreover, the plug may be provided with one or more locators 18 or guides 18 for locating one or more cables at a relatively central portion of the passage 15 through the plug 3. Said locator or guide 18 may for example be arranged such as to counteract that a cable can be positioned relatively close to a lateral side of the plug and/or it can be arranged to facilitate centring the cable(s) within the plug 3. For example, said locators may comprise one or multiple restraining walls or ribs 19, e.g. formed by one or more reinforcing ribs 19 of an injection moulded insertion sleeve 9, or formed by one or more other parts 20.

As shown in Figure 3, the locator or guide 18 can comprise a substantially U-shaped restraining wall 20, which can comprise an/or can be made of a material being relatively rigid or stiff with respect to the compressible material 15. For instance, said material can be or comprise a relatively rigid foam, preferably an intumescent foam, which in case of heat exposure may swell, thereby blocking the passage 16 through the plug 3 even tighter.

It is noted that the locator(s) or guide(s) 18 can serve as a limiter, counteracting that too many and/or to thick cable(s) will be enclosed in the plug 3. Hence, a relatively fool-proof substantially fire resisting seal device can be provided for.

Additionally or alternatively, intumescent material may be provided in a different manner in the plug 3. For example, the compressible sealing foam 15 may itself be or comprise an intumescent foam.

Alternatively or additionally, intumescent material may be provided at an outer side of the plug 3, e.g. provided in a recessed area, such as a recessed angular slot, such that a slit between the plug 3 and the inside of the sawing sleeve 2 can be sealed up even better during a fire.

Further, it is noted that, alternatively or additionally, the sawing sleeve 2 can be provided with an intumescent material, which can expand as a result of heat exposure. Preferably, said intumescent material can be a an intumescent foam. In embodiments, the intumescent material may be provided at an inside of the sawing sleeve 2, in order to enable sealing up a slit between the inside of said sleeve 2 and the outside of the plug 3. Additionally or alternatively, intumescent material may be provided at an outer surface of the sawing sleeve 2, such that when said material swells due to heat exposure, it can fill up at least a part of a space between said outer surface of said sawing sleeve 2 and an inner perimeter of a through hole 101 sawed into the partition 100 in which said sawing sleeve 2 is provided. In embodiments, said intumescent material ca substantially enclose the sawing sleeve 2 in circumferential direction of said sleeve. Advantageously, the intumescent material may be provided in a recess 21, especially an angular slot 21, provided at the outer surface of the sawing sleeve 2, such that can be counteracted that said intumescent material is removed accidently while the sawing sleeve 2 is brought into the partition 100.

Advantageously, the device 1 may be provided with intumescent material, e.g. intumescent foam, such that said intumescent material may spread within a first space outside the sawing sleeve 2, within a second space between the sawing sleeve 2 and the insertion plug 3, and/or within a third space within said plug 3. Although, respective sides of the plug 3 and/or sawing sleeve 2 may therefore be provided with the intumescent material, in alternative embodiments, the sawing sleeve 2 and/or one or more shell parts 9a, 9b of the insertion sleeve 9 may comprise substantially radially extending passages interconnecting an outside and an inside of the respective sleeve 2, 9 in order to enable the intumescent material to spread from an inside thereof to an outside thereof and/or vice versa.

In embodiments, the sawing sleeve 2 may further comprise a radially outwardly extending stop means 22, especially a flange 22, preferably provided near a proximal end portion of the sawing sleeve 2. Preferably, said flange 22 may extend substantially completely around the sawing sleeve. Said stop means 22 may counteract that the sleeve 2 is introduced too deeply into a partition 100 and/or can counteract that the sleeve 2 is unintentionally pushed completely through the partition, i.e. past a distal end face 102 of the partition. Alternatively or additionally, said stop means 22 or flange 22 can facilitate forming a relatively tight seal between the sawing sleeve 2 and the partition 100.

Advantageously, the saw teeth 5 of the sawing sleeve 2 may comprise only a limited number of teeth 5. For instance, at most ten teeth can be provided, preferably even less, such as for instance six, five, four, three or two teeth. Preferably, adjacent teeth may be spaced apart relatively far from each other, e.g. having intervals between them being larger than the width of one of two adjacent teeth, seen in circumferential direction. For example the intervals can be at least two, three, four or five times larger than the width of the tooth 5. By having relatively few saw teeth 5 and relatively wide intervals there between, damage to cables may be counteracted. Additionally or alternatively, the saw teeth 5 can be rounded off or chamfered at a side facing inward the sawing sleeve 2, such as to counteract damage to cables led through said sleeve 2.

It is noted that the sawing sleeve 2 can be made of a plastic material, e.g. ABS plastic material, and/or may be a reinforced plastic, e.g. reinforced with glass and/or carbon or the like. This may for instance be advantageous in order to make the sawing sleeve 2 relatively stiff or rigid, whereas said sleeve 2 can have a limited wall thickness, in order to facilitate that it can cut through a partition 100. The sawing sleeve 2 may be an injection moulded part, and the saw teeth 5 can be formed by forming indentations at the end of the sawing sleeve 2. However, the sawing sleeve 2 can comprise and/or can be made of another material. For example, the sawing sleeve 2 can be made of a metal or a metal alloy, such as aluminium or an aluminium alloy. As another example, the sawing sleeve 2 may be made partly of a relatively cheap material, e.g. a plastic material, and can have saw teeth 5 being made of and/or comprising a relatively rigid, stiff, hard, wear-resistant, and/or strong material, such as hardened steel. For example, the teeth may be provided by inserting a metal insert comprising the saw teeth into a mould prior to injection moulding the plastic portion of the sawing sleeve 2.

As can be seen in Figure 2, the sawing sleeve 2 may be provided with an outer thread 23 for retaining the sawing sleeve 2 in the partition 100. Said outer thread 23 may for instance comprise one or more thread portions extending over a relatively small part of the sawing sleeve 2. For example, the thread 23 may only cover a part of one rotational winding, or can cover at most three, two or one rotational winding.

In embodiments, the insertion plug 3 and/or the sawing sleeve 2 can be provided with fixation means 26 for fixing said insertion plug 3 with respect to the sawing sleeve 2 at least temporarily in at least the axial direction 8 to at least some extent. For example, a distal end portion of the plug, especially its insertion sleeve 9, may be provided with click elements for clicking behind the distal end edge 7 of the sawing sleeve 2. However, alternative or additional fixation means 26 may be provided. For example, in the embodiment shown in Figure 2, the insertion plug 3 and the sawing sleeve 2 are provided with cooperating clicking elements 26a, 26b provided at their respective proximal end portions. Preferably, the fixation means 26 are arranged for releasably locking the insert 3 in the sawing sleeve 2. Further, it is noted that the clicking element 26a of the insert 3 may for instance be integrated with its outwardly protruding portion 13 for sealing a slit between the sawing sleeve 2 and the insert 3. Preferably the fixation means 26 are arranged to provided tactical and/or audible feedback for informing a user that the insert 3 is installed correctly.

Additionally or alternatively, the device 1 may be arranged for providing visual feedback, e.g. a warning, for informing a user that the insert 3 is not inserted far enough into the sawing sleeve 2. For example the insert may be provided with a warning element 27 which may comprise a deviant colour and which may be provided at an outer side of the insert 3, which is visible when the insert is not yet inserted far enough into the sawing sleeve 2, see the middle stage in Figure 1, but which warning element 27 is not longer visible when the insert 3 is inserted correctly, as can be seen in the third stage showed at the lower portion of Figure 1.

Besides, it is noted that the sawing sleeve 2 can be arranged for cooperation with a drill, such as an electric drill, for instance directly, or for instance indirectly, e.g. by means of an adapter 24. In embodiments, the sawing sleeve 2 can be provided with one or more couplers 25 for coupling to a driving device, such as a drill, preferably an electric drill, or an adapter 24 for indirectly coupling the sawing sleeve 2 to a drill. Said coupler 25 can for instance comprise one or more joggles, such as notches and/or protrusions, for restraining a rotational movement of the adapter 24 and/or drill with respect to the sawing sleeve 2, in at least one rotational direction, e.g. a direction corresponding with the cutting direction of the saw teeth 5, and for restraining axial movement of the adapter 24 and/or drill to some extent in an axial direction 8 of the sawing sleeve 2 directed from the proximal end of the sawing sleeve towards the distal end of the sawing sleeve. Preferably, the couplers 25 can be located at or near the proximal end of the sawing sleeve, preferably outside a receiving portion for housing the insertion portion 9 of the insertion plug 3, and/or before the stop means 22 or flange 22 seen in the insertion direction of the sawing sleeve 2.

The invention also relates to a kit of parts, suitable for forming a device 1 as mentioned above. The kit of parts comprises a substantially annular sawing sleeve 2 defining an inner passage 4 for conducting at least one cable there through, the sleeve 2 being provided with saw teeth 5 positioned at a distal end portion 2b of said sleeve 2.

The kit of parts further comprises an insertion plug 3 for enclosing a portion of one or more cables conducted through the sawing sleeve 2, wherein the device 1 is arranged such that the insertion plug 3 can be inserted into the sawing sleeve 2 at least partly such as to substantially seal off the passage 5 through the sawing sleeve 2.

The kit of parts may further comprise an adapter 24 for coupling the sawing sleeve 2 to a drill, especially an electric drill, wherein the adapter 24 comprises one or more couplers 28 for coupling to the sawing sleeve 2 and further comprises a shank 29, which can be grasped by a chuck of a drill. It is noted that the shank 29 can extend in axial direction of the adapter, and may for instance be of cylindrical design, e.g. being shaped as round cylinder, and/or may be shaped as a polygonal prism, e.g. a hexagonal prism. In embodiments, the adapter 24 may be of durable and/or reusable design, intended for installing multiple sawing sleeves 2. For instance, the adapter may be made of a metal or metal alloy, e.g. steel or stainless steel. A kit thus comprise multiple sawing sleeves 2 and corresponding plugs 3.

The invention also relates to an adapter 24. Preferably, the one or more couplers 28 of said adapter that are arranged for coupling to the sawing sleeve 2 can cooperate with one or more couplers 25 provided at the sawing sleeve 2 for coupling to a driving device, such as a drill, preferably an electric drill. Advantageously, the couplers 28 of the adapter 24 and/or the couplers 25 of the sawing sleeve 2 may be arranged such as to restrain a rotational movement of the adapter 25 with respect to the sawing sleeve2, in at least one rotational direction, and for restraining axial movement of the adapter to some extent in an axial direction of the sawing sleeve extending from the proximal end of the sawing sleeve towards the distal end of the sawing sleeve. For example, the couplers 28 of the adapter 24 can be formed as insertion elements 28 which can fit into couplers 25 of the sawing sleeve 2 formed as receiving slots 25 or holes, which can have an end face 25a restraining the respective insertion element 28 in axial direction 8.

The adapter 24 may comprise a centrally provided arbor 29, e.g. a centre pen 29 or pilot drill bit, which may be arranged such that when said adapter 24 is coupled to the sawing sleeve 2, the arbor 29 extend in axial direction 8 of the sawing sleeve 2. When the sawing sleeve 2 is cutting a through hole 101 in the partition 100, the arbor 29 can keep the saw teeth 5 of said sawing sleeve 2 from walking.

Preferably, the adapter 24 can be arranged such that when it is coupled to the sawing sleeve 2, said arbor 29 extends beyond a distal end of said sawing sleeve 2, e.g. for example at least beyond the sawing teeth 5, e.g. extending at least 5 mm, e.g. about 1 cm beyond the distal end of the sawing sleeve 2.

In embodiments, the adapter 24, e.g. its arbor 29, can comprise one or more retaining elements for retaining a sawed loose part of the partition, such as to withdraw said part together with the adapter 24 from the sawing sleeve 2 when said sleeve is sawed into the partition 100. For example, the retaining element can comprise or be a lip for protruding into a proximal end face of the part of the partition to be sawed loose. Said lip can preferably be a bearded lip, i.e. a lip provided with one or more barbs or so-called flukes. Alternatively or additionally, the retaining element may comprise thread, preferably provided at an outer side of the arbor or centre pen 29. In case the adapter 24 is provided with such thread and the sawing sleeve 2 is provide with outer thread 23 as well, it may be of advance when said thread of the adapter has a lead corresponding with the lead of the outer thread 23 of the sawing sleeve 2.

Further, the invention relates to a method for realizing a substantially fire-resistant cable passage through a relatively soft partition 100. The method comprises sawing a through hole 101 or so-called through penetration 101 in a partition 100 by means of a substantially annular sawing sleeve 2 which defines an inner passage 4 for conducting at least one cable there through and which is provided with saw teeth 5 positioned at its distal end portion 2b. For example, the saw-toothed sleeve 2 can be cut into the partition by means of a drill, especially an electric drill, which may be coupled to said sleeve 2 temporarily, e.g. by means of an adapter 24. However, in embodiments, the sawing sleeve may be driven into the partition differently, e.g. by driving it into the partition by hand. It is noted that said sleeve 2 may therefore be provided with a gripping means for gripping said sawing sleeve 2 by hand.

Advantageously, the partition can have a depth 103 or so-called thickness 103 corresponding to the sawing sleeve 2. For instance, the length of the portion 2a of the sawing sleeve 2 extending from its distal end edge 7 up to its radially outwardly extending stop means 22 or flange 22, may for instance correspond with the depth 103 or thickness 103 of the partition 100. For example, said length of said sleeve portion 2a and/or the depth 103 of the partition 100 may be between 25 mm and 15 cm, preferably between 40 mm and 10 cm, such as for instance about 50 mm, 60 mm or 70 mm.

When the sawing sleeve 2 is drilled into the partition, in embodiments, the adapter 24 may be removed from said sleeve 2. Although the sleeve can in embodiments be kept in the drilled though hole 101, e.g. due to friction between its outer surface and the partition, due to outer thread 23 of the sawing sleeve 23, and/or due to other means, a user may also push against said installed sawing sleeve 2 in order to prevent it from being pulled out of the partition. For example, the user may thereto push against an outer flange 22 or other stop means 22.

For example when the adapter is provided with one or more retaining elements, such as outer thread on its centre pen, the cut-out portion of the partition may be pulled out of the sawing sleeve 2 together with the adapter 24. However, in embodiments, said cut-out portion can be removed from the sawing sleeve 2 in a different manner, e.g. by pushing it out of said sleeve 2, preferably after removing the adapter 24 from said sawing sleeve 2.

The method further comprises inserting an insertion plug 3 at least partly into the sawing sleeve 2, wherein said insertion plug 3 is arranged for enclosing a portion of one or more cables conducted through the sawing sleeve 2, such as to substantially seal off the inner passage 4 through the sawing sleeve 2.

It is noted that plug 3 may be inserted without installing any cables. By inserting a temporarily closed plug 3 into the sawing sleeve 2, a sealed passage, preferably a substantially fire retardant and/or fire resistant passage, can be realized in the partition 100. Said passage may later be opened in order to install one or more cables and subsequently seal said passage in a relatively swift, simple and/or fool-proof manner.

When the insertion plug 3 is removed from the sawing sleeve 2, or before inserting it therein for the first time, one or more cables can be led through the sawing sleeve 2 installed in the partition 100. After disposing said cable(s), the plug can then be closed around the cable(s) extending through said sleeve 2, thereby enclosing said one or more cables in said insertion plug 3, preferably by clamping them between the resilient foam 15. Subsequently, the insertion plug 3 can be inserted into the sawing sleeve 2, preferably by sliding it along the cable(s) partly enclosed by said plug 3. It is noted that a user may push the plug 3 into the sawing sleeve 2 until he or she observes a certain feedback, e.g. a tangible and/or audible "click".

In order to remove, replace and/or add one or more cables, the insert 3 may be removed from the installed sawing sleeve 2. For example, by unlocking the fixation means 26 of the device 1, and subsequently withdrawing the plug 3 from said sleeve 2, preferably by sliding it along one or more cables enclosed by said plug 3. In embodiments, the plug 3 can then be opened, e.g. by unlocking one or more respective locks 11. After removing, replacing and/or placing one or more cable(s) within the plug 3, the plug can be closed, and preferably also locked, before it is slit back into a receiving passage 4 of the sawing sleeve 2.

Since the device 1 can be installed in a partition 100, the invention can also relate to a partition 100 provided with a substantially fire resisting seal device 1, preferably being provided with one or more cables led through said device 1.

It is noted that, for the purpose of clarity and a concise description, features are described and/or shown herein as part of the same or separate exemplary embodiments, however, it will be appreciated that the scope of the invention may include embodiments having combinations of all or some of the features described and/or shown.

The invention is not restricted to the embodiments described above. It will be understood that many variants are possible.

For example, it is noted that a distal end portion of the insertion plug 3 may be tapered, such as to facilitate insertion into the sawing sleeve.

As a further example, the insertion plug 3 may be provided with a suitable gripping portion in order to facilitate that it is removed from the sawing sleeve 2.

Further, it is noted that, in embodiments, at least some of the compressible seal material and/or at least some of the intumescent material may comprise an intumescent polyurethane rubber material, such as a polyurethane rubber material that comprises sodium silicates and/or graphite.

These and other embodiments will be apparent to the person skilled in the art an are considered to lie within the scope of the invention as formulated in the following claims.

## Claims

1. Substantially fire resisting seal device for a through hole in a partition for conducting one or more cables there through, comprising:
a substantially annular sawing sleeve defining an inner passage for conducting at least one cable there through, the sleeve being provided with saw teeth positioned at a distal end portion of said sleeve; and
an insertion plug for enclosing a portion of one or more cables conducted through the sawing sleeve,
wherein the device is arranged such that the insertion plug can be inserted into the sawing sleeve at least partly such as to substantially seal off the passage through the sawing sleeve.

2. Device according to claim 1, wherein the insertion plug comprises a compressible seal material, e.g. a compressible foam, preferably a resilient seal material, for enclosing a portion of one or multiple cables.

3. Device according to claim 2, wherein the insertion plug comprises an insertion sleeve, wherein an inner side of the insertion sleeve is provided with the compressible seal material.

4. Device according to any one of the preceding claims, wherein the insertion plug is arranged to be brought from an open position, in which a cable can be placed within and/or removed from the insertion plug, into a closed position, in which the insertion plug is closed, preferably around one or more cables.

5. Device according to claim 4, wherein the insertion plug, preferably its insertion sleeve, is provided with at least one hinge, preferably a film hinge, and/or at least one lock for retaining the insertion plug in the closed position.

6. Device according to any one of the preceding claims, wherein the sawing sleeve further comprises a radially outwardly extending stop means, especially a flange, preferably provided near a proximal end portion of the sawing sleeve.

7. Device according to any one of the preceding claims, wherein the saw teeth comprise a limited number of teeth, for instance at most ten teeth, wherein adjacent teeth are spaced apart relatively far from each other, e.g. having intervals being larger than the width of one of two adjacent teeth.

8. Device according to any one of the preceding claims, wherein the sawing sleeve is provided with an outer thread for retaining the sawing sleeve in the partition.

9. Device according to any one of the preceding claims, wherein the sawing sleeve is provided with an intumescent material which can expand as a result of heat exposure.

10. Device according to any one of the preceding claims, wherein the sawing sleeve is provided with one or more couplers for coupling to a driving device, such as a drill, preferably an electric drill, or an adapter for indirectly coupling the sawing sleeve to a drill.

11. Device according to any one of the preceding claims, wherein the insertion plug and/or the sawing sleeve is/are provided with fixation means for fixing said insertion plug with respect to the sawing sleeve at least temporarily in at least the axial direction to at least some extent.

12. Kit of parts, suitable for forming a device according to any one of the preceding claims, comprising:
a substantially annular sawing sleeve defining an inner passage for conducting at least one cable there through, the sawing sleeve being provided with saw teeth positioned at a distal end portion of said sleeve; and
an insertion plug for enclosing a portion of one or more cables conducted through the sawing sleeve,
wherein the device is arranged such that the insertion plug can be inserted into the sawing sleeve at least partly such as to substantially seal off the passage through the sawing sleeve, the kit of parts further comprising:
an adapter for coupling the sawing sleeve to a drill, especially an electric drill, wherein the adapter comprises one or more couplers for coupling to the sawing sleeve and further comprises a shank for engaging a chuck of a drill.

13. Adapter for a kit of parts according to claim 12, wherein the adapter is arranged for coupling the sawing sleeve of a device according to any one of claims 1-11 to a drill, especially an electric drill, wherein the adapter comprises one or more couplers for coupling to the sawing sleeve and a shank for engaging a chuck of a drill.

14. Adapter according to claim 13, wherein the adapter is provided with a centrally provided arbor, e.g. a centre pen or pilot drill bit.

15. Method for realizing a substantially fire-resistant cable passage through a relatively soft partition, comprising the steps of:
sawing a through hole in a partition by means of a substantially annular sawing sleeve which defines an inner passage for conducting at least one cable there through and which is provided with saw teeth positioned at its distal end portion; and
inserting an insertion plug at least partly into the sawing sleeve, which insertion plug is arranged for enclosing a portion of one or more cables conducted through the sawing sleeve, such as to substantially seal off the passage through the sawing sleeve.
